# FASCICULE DE BREVET EUROPEEN

(11) **EP 4 021 744 B1**
(45) Date de publication et mention de la délivrance du brevet: **23.07.2025**
(21) Numéro de dépôt: 20754790.2
(22) Date de dépôt: 29.07.2020
(51) Int. Cl.: B60H 1/00

(54) **DISPOSTIF DE CHAUFFAGE, VENTILATION ET/OU CLIMATISATION POUR VÉHICULE AUTOMOBILE**
HEIZUNGS-, LÜFTUNGS- UND/ODER KLIMATISIERUNGSVORRICHTUNG FÜR EIN KRAFTFAHRZEUG
HEATING, VENTILATION AND/OR AIR-CONDITIONING DEVICE FOR A MOTOR VEHICLE

(30) Priorité: 28.08.2019 FR 1909475
(43) Date de publication de la demande: 06.07.2022
(73) Titulaire: VALEO SYSTEMES THERMIQUES, 78320 Le Mesnil Saint-Denis (FR)
(72) Inventeur: PIERRES, Philippe, 78320 LE MESNIL SAINT-DENIS (FR); BARBIER, Thierry, 78320 LE MESNIL SAINT-DENIS (FR); ROUSSEAU, Yves, 78320 LE MESNIL SAINT-DENIS (FR); UMMIDI, Naveenkumar, Chennai, Tamil Nadu 600130 (IN)
(74) Mandataire: Valeo Systèmes Thermiques
(86) Numéro de dépôt international: PCT/FR2020/051401
(87) Numéro de publication internationale: WO 2021/038154

(56) Documents cités:
- WO-A1-2016/158250
- DE-A1- 102019 219 535
- JP-A- 2019 177 742
- JP-A- H1 199 817
- KR-A- 20110 126 231
- US-A1- 2003 019 233
- US-B1- 6 351 961

## Description

L'invention concerne le domaine des dispositifs de chauffage, ventilation et/ou climatisation pour véhicule automobile ainsi qu'un véhicule automobile comprenant un tel dispositif.

Elle concerne plus particulièrement un dispositif comprenant un premier conduit, tel un conduit d'air froid, un deuxième conduit, tel un conduit d'air chaud, une chambre de mixage communiquant avec des sorties d'air respectives desdits conduits, et au moins un organe de mixage, propre à répartir un flux d'air entre ces conduits en proportion choisie de façon à ajuster la température de l'air dans la chambre de mixage.

On connaît déjà des dispositifs de ce type permettant de mélanger, dans une proportion réglée, un flux d'air froid provenant du conduit d'air froid et un flux d'air chaud provenant du conduit d'air chaud pour obtenir, dans la chambre de mixage, un flux d'air à température ajustée.

Le document US6351961 B1 présente un climatiseur automobile doté d'une porte de mélange en forme de plaque permettant de contrôler le flux d'air froid et d'air chaud en faisant glisser la porte de mélange à l'intérieur d'un boîtier d'unité.

Ce flux d'air est ensuite réparti dans l'habitacle du véhicule par des moyens de distribution appropriés, comprenant des conduits de sortie d'air aboutissant à différentes bouches ou buses disposées en des endroits choisis de l'habitacle.

Selon une solution connue, les organes de mixage comprennent un volet de mixage, par exemple un volet de type porte coulissante propre à contrôler respectivement les sorties des conduits d'air froid et d'air chaud.

Un tel volet peut se translater de l'une à l'autre de deux positions extrêmes comprenant une position extrême « chaud », dans laquelle la sortie du conduit d'air froid est fermée et la sortie du conduit d'air chaud est ouverte, et une position extrême « froid » dans laquelle la sortie du conduit d'air chaud est fermée et la sortie du conduit d'air froid est ouverte.

Un tel dispositif, avec volet de mixage du type porte coulissante, a notamment pour inconvénient que, lorsque le volet passe de la position extrême « chaud » à la position extrême « froid », de l'air froid pénètre dans la chambre de mixage à partir d'une région de la sortie du conduit d'air froid qui se trouve près d'un bord libre de la porte coulissante. Cette région particulière se trouve précisément à l'opposé de la région de la sortie du conduit d'air chaud, par laquelle le flux d'air chaud pénètre dans la chambre de mixage, c'est-à-dire près d'un bord opposé de la porte coulissante. Il en résulte que le flux d'air et le flux d'air chaud ont tendance à se stratifier et à ne pas bien se mélanger risquant ainsi de ne pas de respecter les températures de consignes données par les occupants du véhicule.

L'invention a notamment pour but de surmonter un tel inconvénient.

Pour cela, l'invention propose un dispositif de chauffage, ventilation et/ou climatisation pour véhicule automobile selon l'objet de la revendication 1.

De cette manière, dans le but de favoriser le mixage et éviter la stratification, la première porte coulissante permet de définir un canal additionnel pour véhiculer une partie du flux d'air s'écoulant au sein du premier conduit à travers ledit au moins un volet de mixage et au sein du deuxième conduit. Autrement dit, le renfoncement, ou évidement, permet de définir un canal additionnel reliant le premier conduit et le deuxième conduit, ceci lorsque le volet de mixage est dans une position intermédiaire entre la première et deuxième position extrême.

Des modes de réalisations particuliers selon l'invention sont selon les revendications dépendantes.

L'invention concerne également un véhicule automobile comprenant un dispositif de chauffage, ventilation et/ou climatisation tel que décrit précédemment.

D'autres caractéristiques et avantages de l'invention ressortiront à la lecture de la description qui suit, en référence aux figures annexées, qui illustrent :
La [Fig. 1] illustre une vue en perspective du dispositif de chauffage, ventilation et/ou climatisation selon l'invention ;
La [Fig. 2] illustre une vue de profil d'une partie du dispositif de chauffage, ventilation et/ou climatisation selon l'invention ;
La [Fig. 3] illustre une vue en perspective d'une partie du dispositif de chauffage, ventilation et/ou climatisation.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

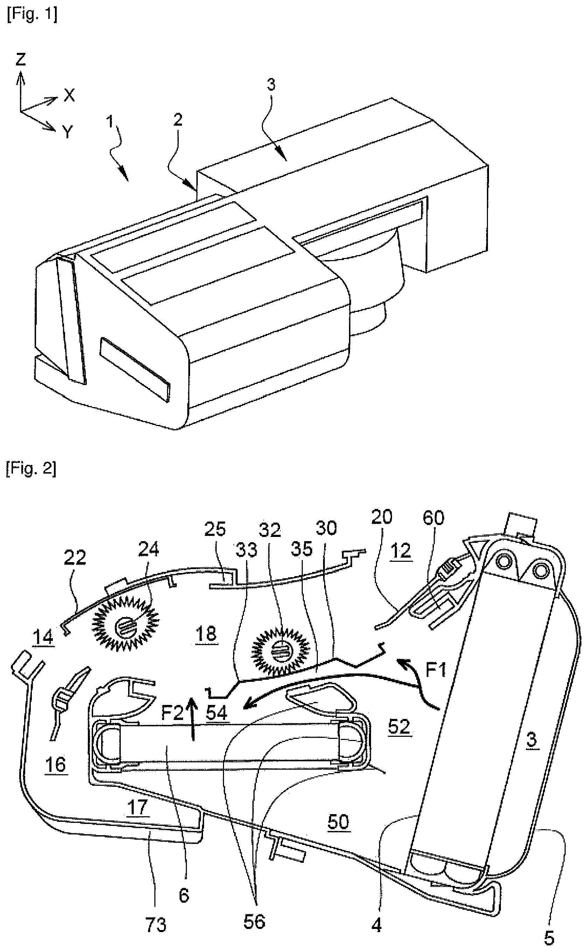

Les termes « amont » et « aval » sont toujours en référence par rapport à l'écoulement d'un flux d'air circulant au sein du dispositif de chauffage, ventilation et/ou climatisation
Sur les [Fig. 1] et [Fig. 2] est schématisé un trièdre XYZ où un axe longitudinal X du dispositif 1 de chauffage, ventilation et/ou climatisation peut correspondre à l'axe longitudinal avant/arrière du véhicule. Un axe transversal Y du dispositif 1 de chauffage, ventilation et/ou climatisation peut correspondre à l'axe transversal droite/gauche du véhicule, et un axe vertical Z du dispositif 1 de chauffage, ventilation et/ou climatisation correspond à l'axe vertical haut/bas du véhicule, chaque axe étant perpendiculaire les uns aux autres notamment lorsque le dispositif 1 de chauffage, ventilation et/ou climatisation est installé dans le véhicule automobile.

Pour obtenir un dispositif de chauffage, ventilation et/ou climatisation avec un faible encombrement stérique vertical, l'invention telle qu'illustrée à la [Fig. 1], l'invention propose un dispositif 1 de chauffage, ventilation et/ou climatisation comprenant un boîtier 2 de forme allongée définissant un canal d'écoulement pour un flux air destiné à être distribué dans l'habitacle dans lequel sont logés des moyens de traitement thermique du flux d'air. Autrement dit, tel qu'illustré en [Fig. 2], le boitier 2 définit grâce à des parois 5 un canal d'écoulement 3, ou un conduit d'écoulement, pour véhiculer un flux d'air depuis une entrée d'air jusqu'à une sortie d'air.

Les moyens de traitement thermique comprennent un premier échangeur de chaleur 4, par exemple un évaporateur, destiné à refroidir et déshumidifier l'intégralité du flux d'air circulant dans le canal d'écoulement 3.

Les moyens de traitement thermique comprennent également un deuxième échangeur de chaleur 6, exemple un radiateur, destiné à réchauffer une partie du flux d'air circulant dans le dispositif 1 de chauffage, ventilation et/ou climatisation, et est agencé en aval, par rapport à l'écoulement du flux d'air, du premier échangeur de chaleur 4. Le deuxième échangeur de chaleur 6 peut éventuellement être couplé à un radiateur électrique additionnel destiné à réchauffer le flux d'air de manière plus rapide, notamment lors du démarrage du véhicule.

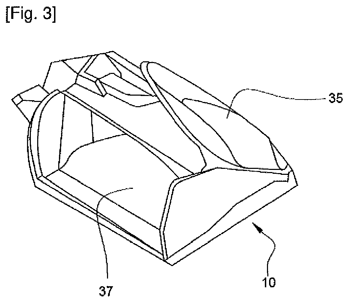

Le flux d'air est introduit dans le boîtier 2 par l'intermédiaire d'au moins une entrée d'air 10 puis est dirigé par l'intermédiaire d'un pulseur qui comprend pour cela un moteur et une roue à pales. Le pulseur achemine le flux d'air depuis l'entrée d'air 10 jusqu'à au moins une sortie, après avoir que celui-ci ait été traité thermiquement par les échangeurs de chaleur 4, 6. L'entrée d'air 10 correspond à un boitier d'entrée d'air comprenant deux ouvertures, une entrée d'air extérieur 35 et une entrée d'air de recyclage 37 comme illustré en [Fig. 3]. Un volet peut être agencé entre les deux ouvertures pour obturer au moins partiellement chacune. L'entrée d'air 10 est agencée sur la partie supérieure par rapport à l'axe vertical Z du dispositif 1 de chauffage, ventilation et/ou climatisation.

Le flux d'air entrant au sein du boitier est véhiculé depuis l'entrée d'air 10 à travers une volute correspondant à une partie du boitier en spirale. La volute présente une entrée d'air correspondant à un orifice présent au sein du boitier, aussi appelé carter, en spirale. La volute présente une évolution radiale en partant d'un point N appelé le nez de la volute, sur une gamme d'angle pouvant aller de 0° à 360°. La volute présente ensuite une sortie de volute ayant la forme d'un conduit rectiligne de manière à ce que le flux d'air sortant de la volute suive cette même forme. Le flux d'air débouche alors dans une partie appelée le divergent qui correspond à une partie du canal d'écoulement 3 rectiligne ayant un agrandissement en hauteur selon l'axe Z. Le flux d'air s'écoule à travers le divergent jusqu'au premier échangeur de chaleur 4.

Une fois que le flux d'air a été refroidi par le premier échangeur de chaleur 4, le dispositif 1 comprend un troisième conduit 50 (les deux premiers conduits sont décrits ci-dessous) reliant fluidiquement le premier échangeur de chaleur 4 au deuxième échangeur de chaleur 6. Ainsi, le flux d'air permettant au flux d'air froid peut s'écouler depuis le premier échangeur de chaleur 4 jusqu'au deuxième échangeur de chaleur 6.

Selon le mode de réalisation illustré à la Fig. 2, pour garantir que le flux d'air froid, issu du premier échangeur de chaleur 4, ne soit pas thermiquement contaminé par le deuxième échangeur de chaleur 6, le dispositif 1 comprend en un premier conduit 52 contournant le deuxième échangeur de chaleur 6. Ainsi, le flux d'air froid, ayant traversé le premier échangeur de chaleur 4, circule soit à travers le deuxième échangeur de chaleur 6 *via* le troisième conduit 50 pour être réchauffé, soit contourne le deuxième échangeur de chaleur 6 par le premier conduit 52 afin de conserver sa basse température. Le flux d'air réchauffé par le deuxième échangeur de chaleur 6 s'écoule en aval de celui-ci au sein d'un deuxième conduit 54.

Les conduits 50, 52, 54 correspondent à des portions du canal d'écoulement 3 et sont séparés les uns des autres par des cloisons internes 56, ou déflecteurs, ou encore par l'échangeur de chaleur 6 agencé entre le troisième conduit 50 et le deuxième conduit 54.

Le flux d'air chaud et le flux d'air froid circulant respectivement dans le deuxième conduit 54 et dans le premier conduit 52 sont alors orientés jusqu'à une zone de mixage 18 pour y être mélangés et distribués vers des bouches de sortie d'air 12,14,16 aux températures consignées. Pour réaliser ce mélange dans des proportions variables, le dispositif 1 comprend un volet de mixage 30 permettant de réguler la proportion de flux d'air chaud issu du deuxième conduit 54 et la proportion de flux d'air froid issu du premier conduit 52.

Le volet de mixage 30 correspond à un volet de type porte coulissante, c'est-à-dire qu'il comprend une première porte coulissante 30 sur laquelle est agencée au moins une crémaillère. Afin de mettre le volet de mixage 30 en mouvement, au moins un engrenage 32 complémentaire à la crémaillère est mis en rotation autour d'un axe par un actionneur non illustré. La rotation de l'engrenage 32 entraîne le mouvement de la première porte coulissante 30 entre deux positions extrêmes, une première position extrême où le volet de mixage 30 obture intégralement le premier conduit 52 afin que le flux d'air froid ne puisse pas accéder à la chambre de mixage 18 et une seconde position extrême où le volet de mixage 30 obture le deuxième conduit d'air 54 de manière à ce que le flux d'air air ayant traversé le deuxième échangeur de chaleur 6 ne puisse pas accéder à la chambre de mixage 18. La première porte coulissante 30 est configurée pour adopter toute configuration intermédiaire.

Autrement dit, le dispositif 1 comprend au moins un premier conduit 52 pour l'écoulement d'un premier flux d'air F1 correspondant à un flux d'air froid, définissant une première sortie d'air. Le dispositif comprend au moins un deuxième conduit 54 pour l'écoulement d'un deuxième flux d'air F2 correspond à un flux d'air chaud, définissant une deuxième sortie d'air. Le dispositif 1 comprend au moins une chambre de mixage 18 communiquant avec les sorties d'air respectives desdits conduits 52**,** 54. Le dispositif 1 comprend en outre au moins un volet de mixage 30 comprenant une première porte coulissante 30 agencé de façon à contrôler la répartition des premier F1 et deuxième F2 flux d'air dans ladite au moins une chambre de mixage 18, ledit au moins un volet de mixage 30 étant agencé mobile entre une première position extrême obturant la première sortie d'air du premier conduit 52, et, une deuxième position extrême obturant la deuxième sortie d'air du deuxième conduit 54, et est mobile entre toute position intermédiaire. Selon l'invention, ladite première porte coulissante 30 présente au moins un renfoncement 33, de façon à manière à relier fluidiquement le premier conduit d'air 52 et le deuxième conduit d'air 54, lorsque ledit au moins un volet de mixage 30 est agencé dans une position intermédiaire entre la première et la deuxième position extrême.

La porte coulissante selon l'invention comprend un renfoncement 33, autrement dit un évidement ou un retrait. On peut aussi dire que la première porte coulissante 30 a une section de profil en oméga (ou la porte coulissante présente un profilé oméga), ou que la porte coulissante comporte 4 coudes, ou 4 plis. Ce renfoncement 33 a une hauteur, par rapport aux dimensions du volet, située dans un intervalle compris entre [3 ; 30] millimètres, on peut aussi parler de profondeur comprise entre 3 et 30 millimètres. Une telle profondeur garantit qu'un débit suffisant de flux d'air froid puisse aller du premier conduit 52 au deuxième conduit 54 et assurer un pré-mélange satisfaisant pour limiter les phénomènes de stratification.

On peut également décrire le volet de mixage 30 comme comprenant une porte coulissante constituée de trois parties sensiblement planes avec une partie centrale située entre les deux autres parties extrémales chacune étant située à une extrémité longitudinale du volet de mixage 30. La partie centrale est reliée à chaque partie extrémale par un tronçon incliné ou perpendiculaire à chaque partie sensiblement plane de manière à ce que la partie centrale soit décalée verticalement par rapport aux deux parties extrémales. En d'autres termes, les parties extrémales sont agencées dans un même plan tandis que la partie centrale est agencée dans un plan distinct et parallèle au plan des parties extrémales. La hauteur, ou la profondeur, du décalage axial entre les parties extrémale et la partie centrale correspond au renfoncement 33.

La première porte coulissante 30 et plus précisément le renfoncement 33 permet de définir un canal additionnel 35 pour véhiculer une partie du flux d'air F1 s'écoulant au sein du premier conduit 52 à travers ledit au moins un volet de mixage 30 et au sein du deuxième conduit 54. Autrement dit, le renfoncement 33, ou évidement, permet de définir un canal additionnel 35 reliant le premier conduit 52 et le deuxième conduit 54, ceci lorsque le volet de mixage 30 est dans une position intermédiaire entre la première et deuxième position extrême.

Lorsque le volet de mixage 30 est dans une des deux positions extrêmes, les deux conduits 52, 54 ne sont plus en communication fluidique et soit le flux d'air froid F1, soit le flux d'air chaud F2 pénètre dans la chambre de mixage 18. La première porte coulissante 30 pouvant comprend des joints pour assurer une meilleure étanchéité.

Le canal additionnel 35 est défini d'une part par la porte coulissante 33 et d'autre part par une cloison interne 56 du boitier. Ainsi, une partie du premier flux d'air F1 correspondant au flux d'air froid circulant dans le premier conduit 52 peut être véhiculé dans le deuxième conduit 54 dans lequel s'écoule le deuxième flux d'air F2 correspondant au flux d'air chaud. Ceci permet d'avoir un pré-mélange avant la chambre de mixage 18 et limite ainsi les phénomènes de stratifications. Telle qu'illustré en figure 2, on s'assure ainsi que le flux d'air sortant par les bouches de sortie d'air 14 et 16 ne soit pas trop chaud puisqu'il a été préalablement mélangé avec une partie du flux d'air F1 froid.

Comme illustré en figure 2, le dispositif comprend un logement 60 dans lequel le volet de mixage est partiellement escamotée lorsque celui-ci est dans une position extrême.

Comme illustré en figure 2, le volet mixage 30 est légèrement incurvée et adopte une trajectoire courbée. Bien évidemment, le volet de mixage peut être plan et adopter une trajectoire plane.

La sortie comprend plusieurs bouches de sortie d'air illustrés en [Fig. 2] distribuant les flux d'air vers des buses débouchant dans différentes régions de l'habitacle. La bouche de sortie d'air 12 est configurée pour mener le flux d'air vers la buse de dégivrage permettant ainsi de désembuer le pare-brise. La bouche de sortie d'air 14 est apte à amener le flux d'air vers la buse de ventilation latéraux/centraux permettant ainsi de refroidir/réchauffer les passagers du véhicule. Enfin, la bouche de sortie d'air 16 oriente le flux d'air vers la buse pied permettant de refroidir/réchauffer les pieds des passagers avant du véhicule. Chaque bouche de sortie d'air peut être associée avec un conduit d'air pour véhiculer le flux d'air jusqu'à la buse correspondante.

La bouche de sortie d'air 16 dite pieds est associée à un conduit 17 de sortie d'air 17 longeant le canal d'écoulement 3, et plus précisément le troisième conduit 50, en partie inférieure, par rapport à l'axe vertical Z du dispositif 1 de chauffage, ventilation et/ou climatisation. On peut aussi dire que le conduit 17 de sortie d'air dit « pieds » est agencé sur la partie du boitier 2 opposée à l'entrée d'air 10, ou que le conduit 17 de sortie d'air « pieds » longe la surface inférieure, ou externe, du boitier 2 du dispositif 1 de chauffage, ventilation et/ou climatisation, plus précisément le conduit 17 de sortie d'air « pieds » longe la surface inférieure de la paroi 5 du boitier 2 définissant le canal d'écoulement 3. La paroi 5 comprend une surface interne définissant un volume interne correspondant au canal d'écoulement 3 et une surface externe agencé à l'extérieur du canal d'écoulement 3, le conduit 17 de sortie d'air longe la surface externe de ladite paroi 5. Comme illustré en [Fig. 2], le conduit 17 de sortie d'air « pieds » s'étend depuis la chambre de mixage 18 jusqu'à une buse débouchant dans la zone des pieds de l'habitacle. En d'autres termes, le conduit 17 de sortie d'air pieds comprend une entrée correspondant à la bouche 16 et s'étend alors le long des parois 5 du boitier 2 jusqu'à une buse pieds. On peut aussi dire que le conduit 17 de sortie d'air est juxtaposé, ou assujetti, au paroi 5 du boitier 2 de manière à véhiculer le flux d'air dans une direction sensiblement opposée à la direction du flux d'air traversant le premier échangeur de chaleur 4. On peut également dire que le conduit 17 de sortie d'air « pieds » oriente le flux d'air depuis la chambre de mixage 18 jusqu'au tablier, ou la paroi pare-feu, du véhicule. On comprend ainsi que le conduit 17 de sortie d'air est défini d'une part par une paroi 5 du boitier 2 définissant le canal d'écoulement 3 et d'autre part par une autre paroi externe 73 agencée à l'extérieur du canal d'écoulement 3. Pour cela, le conduit 17 de sortie d'air « pieds » comprend au moins un coude. Bien évidemment, l'invention ne se limite pas à ce mode de réalisation précis.

Un volet de distribution est agencé au niveau de chaque bouche de sortie d'air 12,14,16. Chaque volet de distribution est configuré pour passer d'une configuration où il obture intégralement chaque bouche de sortie d'air à une configuration où il permet le flux d'air de circuler intégralement au sein du conduit de sortie d'air correspondant. Bien évidemment, chaque volet de distribution est apte à adopter toute position intermédiaire.

Un premier volet de distribution 22 de type porte coulissante (plus connu sous le terme anglophone « sliding door »), correspondant à une porte coulissante glissante en déplacement au sein de rails et sur laquelle est agencée au moins une crémaillère. Afin de mettre le premier volet de distribution 22 en mouvement, au moins un engrenage 24 complémentaire à la crémaillère est mis en rotation autour d'un axe par un actionneur non illustré. La rotation de l'engrenage 24 entraîne le mouvement de la deuxième porte coulissante 22 entre deux position extrêmes, une première position extrême où le premier volet de distribution 22 obture la bouche de sortie d'air 14 et une seconde position extrême où le premier volet de distribution 22 permet au flux d'air issu de la chambre de mixage 18 de s'écouler à travers la bouche de sortie d'air 14. Comme illustré en figure 2, le premier volet de distribution 22 n'est pas plan, autrement dit la deuxième porte coulissante 22 est incurvée et adopte une trajectoire courbée. On peut également dire que la deuxième porte coulissante 22 s'inscrit dans une pluralité de plans.

Dans la deuxième position extrême le premier volet de distribution 22 est agencé dans un logement de retrait 25 dans lequel la deuxième porte coulissante 22 est partiellement escamotée. Le logement de retrait 25 est de dimensions (longueur, largeur) supérieures ou égales à celles de la première bouche de sortie d'air 14 afin de ne pas gêner l'écoulement du flux d'air. Le dispositif 1 peut comprendre un deuxième logement de retrait 25 afin de partiellement escamoter la deuxième porte coulissante 22 dans l'autre position extrême. Ceci permet d'améliorer l'étanchéité par rapport à une porte coulissante venant uniquement en butée contre une paroi puisque le logement de retrait 25 créée un labyrinthe pour le flux d'air.

En résumé, la première porte coulissante 30 est agencée en amont de la chambre de mixage 18 et la deuxième porte coulissante 22 est agencée en aval de la chambre de mixage 18, ceci par rapport à l'écoulement du flux d'air.

Un deuxième volet de distribution 20 de type drapeau, correspondant à une porte avec un arbre de rotation agencée à une des extrémités de la porte, est agencé au niveau de la bouche de sortie d'air 12.

Un troisième volet de distribution 26 de type papillon, correspondant à un volet avec un arbre de rotation et une ou deux pales agencées de part et d'autre de l'arbre de rotation, est agencé au niveau de la bouche de sortie d'air 16 et permet d'obturer ou non le conduit 17 de sortie d'air dit « pieds ».

Le premier volet de distribution 22, le deuxième volet de distribution 20 et le troisième volet de distribution 26 sont de type différent, ou de nature différente, à savoir une porte coulissante, un volet drapeau et un volet papillon. Autrement dit, le premier volet de distribution 22 est d'un type différent du deuxième volet de distribution 20 ainsi que du troisième volet de distribution 26, les deuxième et troisième volets de distribution étant aussi de type différent.

Le premier volet de distribution 22, le deuxième volet de distribution 20 et le troisième volet de distribution 26 sont tous agencés en aval de la chambre de mixage 18 par rapport à l'écoulement du flux d'air.

Le premier échangeur de chaleur 4 comprend deux chambres collectrices et un faisceau thermique comprenant un ensemble de tubes ou plaques et on considère ici que le faisceau thermique définit un plan. Le deuxième échangeur de chaleur 6 comprend deux chambres collectrices et un faisceau thermique comprenant un ensemble de tubes ou plaques et on considère ici que le faisceau thermique définit un plan, les deux échangeurs de chaleur 4,6 sont inscrit dans des plans sensiblement orthogonaux ceci permet un gain considérable en hauteur.

Afin de limiter les contraintes stériques encore plus, l'angle entre le plan du premier échangeur de chaleur 4 et le plan du deuxième échangeur de chaleur 6 est compris dans un intervalle allant de [40° à 120°].

Le dispositif 1 peut comprendre un conduit d'évacuation permettant de guider les condensats vers l'extérieur du boitier 2.

## Revendications

1. Dispositif (1) de chauffage, ventilation et/ou climatisation pour véhicule automobile, dans lequel sont agencés un premier échangeur de chaleur (4), un deuxième échangeur de chaleur (6), le dispositif comprenant un boitier (2) définissant un canal d'écoulement (3) pour un flux d'air avec
a. au moins un premier conduit (52) pour l'écoulement d'un premier flux d'air (F1), définissant une première sortie d'air,
b. au moins un deuxième conduit (54) pour l'écoulement d'un deuxième flux d'air (F2), définissant une deuxième sortie d'air,
c. au moins une chambre de mixage (18) communiquant avec les sorties d'air respectives desdits conduits (52, 54), le premier conduit (52) reliant directement le premier échangeur de chaleur (4) à la chambre de mixage (18) en contournant le deuxième échangeur de chaleur (6), le deuxième conduit (54) reliant le deuxième échangeur de chaleur (6) à la chambre de mixage (18), et
d. au moins un volet de mixage (30) comprenant une première porte coulissante (30) agencé de façon à contrôler la répartition des premier (F1) et deuxième (F2) flux d'air dans ladite au moins une chambre de mixage (18), ledit au moins un volet de mixage (30) étant agencé mobile entre une première position extrême obturant le premier conduit (52), et, une deuxième position extrême obturant le deuxième conduit (54),
e. le dispositif comprenant un troisième conduit (50) reliant le premier échangeur de chaleur (4) au deuxième échangeur de chaleur (6),
f. le premier échangeur de chaleur étant agencé de manière verticale par rapport au véhicule à l'état monté,
g. le dispositif (1) comprenant au moins une bouche de sortie d'air (12,14,16) agencé en aval de la chambre de mixage (18), chaque bouche de sortie d'air (12,14,16) étant configuré pour guider le flux d'air notamment vers différentes régions d'un habitacle de véhicule, et au moins un conduit de sortie d'air (17) longeant une paroi (5) du canal d'écoulement (3) de manière à orienter le flux d'air dans une direction sensiblement opposée à la direction du flux d'air lorsqu'il traverse le premier échangeur de chaleur (4), **caractérisé en ce que** :
h. ladite première porte coulissante (30) présente au moins un renfoncement (33), de façon à manière à relier fluidiquement le premier conduit d'air (52) et le deuxième conduit d'air (54), lorsque ledit au moins un volet de mixage (30) est agencé dans une position intermédiaire entre les première et deuxième positions extrêmes,
i. le deuxième échangeur de chaleur est agencé de manière horizontale par rapport au véhicule à l'état monté,
j. le dispositif comprend un premier volet de distribution (22) comprenant une deuxième porte coulissante agencée de manière à pouvoir obturer au moins partiellement un autre desdits conduits de sortie d'air (12,14).

2. Dispositif (1) selon la revendication 1, dans lequel le renfoncement (33) a une profondeur comprise dans un intervalle [3 ; 30] millimètres.

3. Dispositif (1) selon la revendication 1 ou 2, dans lequel le conduit de sortie d'air (17) est défini d'une part par une paroi (5) du boitier (2) définissant le canal d'écoulement (3) et d'autre part par une autre paroi externe (73) agencée à l'extérieur du canal d'écoulement (3).

4. Dispositif (1) selon l'une des revendications précédentes, dans lequel le boitier (2) comprend une entrée d'air (10) et ledit conduit de sortie d'air (17) est agencé sur la partie du boitier (2) opposée à ladite entrée d'air (10).

5. Véhicule automobile **caractérisé en ce qu'**il comprend un dispositif (1) de chauffage, ventilation et/ou climatisation selon l'une des revendications précédentes.

## Patentansprüche

1. Heizungs-, Lüftungs- und/oder Klimatisierungsvorrichtung (1) für ein Kraftfahrzeug, in der ein erster Wärmetauscher (4) und ein zweiter Wärmetauscher (6) angeordnet sind, wobei die Anlage ein Gehäuse (2) umfasst, das einen Strömungskanal (3) für einen Luftstrom definiert mit
a. mindestens einer ersten Leitung (52) für das Durchströmen eines ersten Luftstroms (F1), die einen ersten Luftauslass definiert,
b. mindestens einer zweiten Leitung (54) für das Durchströmen eines zweiten Luftstroms (F2), die einen zweiten Luftauslass definiert,
c. mindestens einer Mischkammer (18), die mit den jeweiligen Luftauslässen der Leitungen (52, 54) in Verbindung steht, wobei die erste Leitung (52) den ersten Wärmetauscher (4) direkt mit der Mischkammer (18) verbindet, indem sie den zweiten Wärmetauscher (6) umgeht, die zweite Leitung (54) den zweiten Wärmetauscher (6) mit der Mischkammer (18) verbindet, und
d. mindestens einer Mischklappe (30), die eine erste Schiebetür (30) umfasst, die so angeordnet ist, dass sie die Verteilung des ersten (F1) und zweiten (F2) Luftstroms in der mindestens einen Mischkammer (18) steuert, wobei die mindestens eine Mischklappe (30) so angeordnet ist, dass sie zwischen einer ersten Endposition, die die erste Leitung (52) verschließt, und einer zweiten Endposition, die die zweite Leitung (54) verschließt, beweglich ist,
e. die Vorrichtung umfassend eine dritte Leitung (50), die den ersten Wärmetauscher (4) mit dem zweiten Wärmetauscher (6) verbindet,
f. wobei der erste Wärmetauscher im montierten Zustand vertikal zu dem Fahrzeug angeordnet ist,
g. die Vorrichtung (1) umfassend mindestens eine der Mischkammer (18) nachgelagert angeordnete Luftaustrittsöffnung (12, 14, 16), wobei jede Luftaustrittsöffnung (12, 14, 16) so konfiguriert ist, dass sie den Luftstrom insbesondere zu verschiedenen Bereichen eines Fahrzeuginnenraums leitet, und mindestens eine Luftauslassleitung (17), die entlang einer Wand (5) des Strömungskanals (3) verläuft, um den Luftstrom in eine Richtung zu lenken, die im Wesentlichen entgegengesetzt zur Richtung des Luftstroms ist, wenn er den ersten Wärmetauscher (4) durchquert, **dadurch gekennzeichnet, dass**:
h. die erste Schiebetür (30) mindestens eine Vertiefung (33) aufweist, um den ersten Luftkanal (52) und den zweiten Luftkanal (54) fluidisch zu verbinden, wenn die mindestens eine Mischklappe (30) in einer Zwischenposition zwischen der ersten und der zweiten Endposition angeordnet ist,
i. der zweite Wärmetauscher im montierten Zustand horizontal zu dem Fahrzeug angeordnet ist,
j. die Vorrichtung eine erste Verteilerklappe (22) umfasst, die eine zweite Schiebetür umfasst, die so angeordnet ist, dass sie einen anderen der Luftauslasskanäle (12, 14) zumindest teilweise verschließen kann.

2. Vorrichtung (1) nach Anspruch 1, bei der die Vertiefung (33) eine Tiefe in einem Bereich von [3; 30] Millimetern hat.

3. Vorrichtung (1) nach Anspruch 1 oder 2, bei der der Luftaustrittskanal (17) einerseits durch eine den Strömungskanal (3) definierende Wand (5) des Gehäuses (2) und andererseits durch eine weitere, außerhalb des Strömungskanals (3) angeordnete Außenwand (73) definiert ist.

4. Vorrichtung (1) nach einem der vorhergehenden Ansprüche, bei der das Gehäuse (2) einen Lufteinlass (10) umfasst und der Luftauslasskanal (17) auf dem Teil des Gehäuses (2) angeordnet ist, der dem Lufteinlass (10) gegenüberliegt.

5. Kraftfahrzeug, **dadurch gekennzeichnet, dass** es eine Heizungs-, Lüftungs- und/oder Klimatisierungsvorrichtung (1) nach einem der vorhergehenden Ansprüche umfasst.

## Claims

1. Motor vehicle heating, ventilation and/or air conditioning device (1) which contains a first heat exchanger (4) and a second heat exchanger (6), the device comprising a housing (2) defining a flow channel (3) for a stream of air which has
a. at least a first duct (52) for the flow of a first stream of air (F1), defining a first air outlet,
b. at least a second duct (54) for the flow of a second stream of air (F2), defining a second air outlet,
c. at least one mixing chamber (18) communicating with the respective air outlets of said ducts (52, 54), the first duct (52) directly connecting the first heat exchanger (4) to the mixing chamber (18), bypassing the second heat exchanger (6), and the second duct (54) connecting the second heat exchanger (6) to the mixing chamber (18), and
d. at least one mixing flap (30) comprising a first sliding door (30) arranged so as to control the apportionment of the first stream of air (F1) and second stream of air (F2) in said at least one mixing chamber (18), said at least one mixing flap (30) being arranged so as to be movable between a first end position, in which it closes the first duct (52), and a second end position, in which it closes the second duct (54),
e. the device comprising a third duct (50) connecting the first heat exchanger (4) to the second heat exchanger (6),
f. the first heat exchanger being arranged vertically in relation to the vehicle in the mounted state,
g. the device (1) comprising at least one air outlet opening (12, 14, 16) arranged downstream of the mixing chamber (18), each air outlet opening (12, 14, 16) being configured to guide the stream of air in particular towards various regions of a vehicle passenger compartment, and at least one air outlet duct (17) running along a wall (5) of the flow channel (3) so as to direct the stream of air in a direction substantially away from the direction of the stream of air as it passes through the first heat exchanger (4), **characterized in that**:
h. said first sliding door (30) has at least one recess (33), so as to fluidically connect the first air duct (52) and the second air duct (54), when said at least one mixing flap (30) is arranged in an intermediate position between the first and the second end position,
i. the second heat exchanger is arranged horizontally in relation to the vehicle in the mounted state,
j. the device comprises a first distribution flap (22) comprising a second sliding door arranged so as to be able to at least partially close another of said air outlet ducts (12, 14).

2. Device (1) according to Claim 1, wherein the recess (33) has a depth that falls within a range of [3-30] millimetres.

3. Device (1) according to Claim 1 or 2, wherein the air outlet duct (17) is defined on the one hand by a wall (5) of the housing (2) that defines the flow channel (3) and on the other hand by another external wall (73) arranged outside the flow channel (3).

4. Device (1) according to one of the preceding claims, wherein the housing (2) comprises an air inlet (10) and said air outlet duct (17) is arranged on the opposite part of the housing (2) to said air inlet (10).

5. Motor vehicle, **characterized in that** it comprises a heating, ventilation and/or air-conditioning device (1) according to one of the preceding claims.
